# FASCICULE DE BREVET EUROPEEN

(11) **EP 1 707 026 B1**
(45) Date de publication et mention de la délivrance du brevet: **26.04.2017**
(21) Numéro de dépôt: 05700671.0
(22) Date de dépôt: 03.01.2005
(51) Int. Cl.: H04W 48/18, H04W 28/08, H04W 36/00, H04W 36/22, H04W 48/20, H04W 72/04, H04W 76/02

(54) **PROCEDE D'ALLOCATION DE RESSOURCES DE COMMUNICATION ET SYSTEME DE RADIOCOMMUNICATION POUR LA MISE EN OEUVRE DU PROCEDE**
VERFAHREN ZUR KOMMUNIKATIONSBETRIEBSMITTELZUWEISUNG, UND FUNKKOMMUNIKATIONSSYSTEM DAFÜR
METHOD FOR ALLOCATING COMMUNICATION RESOURCES AND RADIOCOMMUNICATION SYSTEM THEREFOR

(30) Priorité: 08.01.2004 FR 0400134
(43) Date de publication de la demande: 04.10.2006
(73) Titulaire: ALCATEL LUCENT, 92100 Boulogne-Billancourt (FR)
(72) Inventeur: LUCIDARME, Thierry, F-78180 Montigny Le Bretonneux (FR)
(74) Mandataire: Berthier, Karine
(86) Numéro de dépôt international: PCT/EP2005/000006
(87) Numéro de publication internationale: WO 2005/076652

(56) Documents cités:
- EP-A- 1 420 604
- DE-A- 10 214 934
- US-B1- 6 198 937

## Description

La présente invention concerne l'allocation de ressources de communication dans un système de radiocommunication hétérogène. Elle concerne plus particulièrement l'allocation de ressources de communication d'un sous-système parmi plusieurs sous-systèmes compris dans le système de radiocommunication, les sous-systèmes présentant des techniques d'accès radio différentes.

Il est connu que les performances des radiocommunications sont amplement liées à la technique d'accès radio utilisée. A titre d'exemple, on peut citer la technique d'accès multiple à répartition temporelle ou TDMA ("Time Division Multiple Access"), dans laquelle les ressources de communication correspondent à des tranches temporelles distinctes sur des canaux ayant une fréquence donnée. On peut également citer la technique d'accès multiple à répartition par codes ou CDMA ("Code Division Multiple Access"), dans laquelle les données à transmettre sont modulées par des codes quasi orthogonaux connus de l'émetteur comme du récepteur.

Lorsqu'un système de radiocommunication comprend différents sous-systèmes utilisant des techniques d'accès radio différentes, la question de la répartition du trafic peut se poser. Il est en effet souhaitable de répartir le trafic entre les sous-systèmes, en fonction des performances offertes par ces différents sous-systèmes, de manière à obtenir les meilleures performances possibles. Il est en outre souhaitable de répartir le trafic entre les sous-systèmes, de façon à pouvoir écouler un trafic maximum dans l'ensemble du système.

Ce cas peut se produire notamment dans le contexte d'un réseau de radiocommunication mixte comprenant un sous-système de deuxième génération (2G ou 2,5G), tel que le système GSM ("Global System for Mobile communication") éventuellement étendu à la norme de transmission de données par paquets GPRS ("General Packet Radio Service"), et un sous-système de troisième génération (3G), tel que le système UMTS ("Universal Mobile Telecommunications System"). Un terminal radio bimode ayant des capacités pour communiquer en 2G et en 3G pourra alors être orienté vers l'un des deux sous-systèmes de façon préférentielle, de manière à optimiser la qualité de ses communications.

Il y a tout d'abord lieu de noter que la répartition du trafic dans un tel système mixte n'est pas aisée, ni clairement envisageable par un homme du métier, car les terminaux mobiles sont attachés à l'un des sous-systèmes dans la période qui précède leur entrée en communication. De fait, les communications sont donc naturellement établies sur le sous-système de rattachement, et il n'est pas évident de modifier un tel rattachement, qui est généralement à l'initiative des seuls terminaux mobiles, au moins dans certains systèmes aptes à mettre en oeuvre des transmissions de données.

En considérant qu'un tel obstacle soit levé, une idée largement répandue est d'effectuer une répartition du trafic, dans un tel système, en fonction du type des communications à mettre en oeuvre. Par exemple, les communications vocales sont souvent affectées au sous-système 2G en priorité, tandis que les transmissions de données par paquets sont généralement affectées au sous-système 3G en priorité. Un repli vers l'autre sous-système n'est prévu que lorsque le sous-système prioritaire est saturé. Cette répartition se base notamment sur l'idée que chaque sous-système serait mieux adapté à la mise en oeuvre d'un service donné.

Or il a été constaté qu'une telle répartition est sous-optimale car elle néglige les performances réelles des sous-systèmes du fait de leurs techniques d'accès radio différentes et/ou du spectre dont ils disposent respectivement. A titre d'exemple, un sous-système 2G ou 2,5G dispose classiquement d'un spectre plus abondant (pouvant atteindre 75 MHz dans la bande fréquentielle des 1800 MHz) qu'un sous-système 3G (dont le spectre peut classiquement avoir une largeur en deçà de 15 MHz, dans les réseaux 3G européens). Pour ces raisons, une affectation systématique des communications en mode paquets au sous-système 3G est très discutable.

En outre, si les communications d'un premier type donné sont largement prépondérantes par rapport aux communications d'un second type, ce mécanisme ne résout pas le problème de l'allocation de nouvelles communications du premier type lorsque le sous-système vers lequel elles sont habituellement orientées est saturé.

En outre, même s'il peut être envisageable de déterminer par calcul une stratégie d'allocation basée sur les performances des sous-systèmes dans des hypothèses extrêmes de trafic, par exemple lorsque le trafic est quasi inexistant ou, au contraire, intense, il est plus difficile de définir une stratégie d'allocation dans des hypothèses moyennes de trafic, qui représentent pourtant le cas le plus courant dans la réalité. La demande de brevet DE 102 14 934 A1 divulgue un procédé de gestion des ressources radio dans un système de communication spécifiquement adapté pour réaliser un transfert intercellulaire, en anglais "handover", dans un système abonné doté de plusieurs sous-systèmes de communication radio différents, tels que les système GSM et UMTS. Selon ce procédé, des fonctions décentralisées de gestion de ressources fournissent des mesures de charge sur leurs sous-systèmes respectifs à une fonction centralisée de gestion de ressources radio. Cette dernière leur retourne des objectifs de charge déterminés dynamiquement en fonction des mesures reçues. Ce procédé vise à équilibrer les charges respectives des sous-systèmes de communication.

Un but de la présente invention est de pallier aux inconvénients de l'état de l'art, en proposant un mécanisme d'allocation tenant compte des performances des sous-systèmes composant le système de radiocommunication considéré.

Un autre but de l'invention est de proposer un mécanisme d'allocation visant à permettre l'écoulement d'une grande quantité de trafic dans le système.

Un autre but de l'invention est d'allouer les ressources de communication du système avec une plus grande souplesse, c'est-à-dire sans être trop dépendant du sous-système de rattachement.

Un autre but de l'invention est de définir une stratégie d'allocation des ressources de communication des différents sous-systèmes du système de radiocommunication, cette stratégie étant applicable à un modèle de trafic réaliste, sans se limiter à des hypothèses extrêmes sur le trafic.

L'invention propose ainsi un procédé d'allocation de ressources de communication dans un système de radiocommunication selon la revendication indépendante 1 et un système de radiocommunication selon la revendication indépendante 13. Les revendications dépendantes 2-12 proposent des modes de réalisation de l'invention.

L'allocation des ressources du système de radiocommunication est donc effectuée en considérant une indication relative à une occupation des ressources de communication, c'est-à-dire la charge de certains au moins des sous-systèmes. Cela permet de ne pas surcharger certains sous-systèmes par rapport à d'autres. Cela permet en outre avantageusement d'optimiser la qualité des communications mises en oeuvre en les orientant vers le sous-système du système de radiocommunication qui offre la meilleure qualité dans les conditions de charge observées, du fait du type de son accès radio. A titre d'exemple, un sous-système ayant un accès radio de type TDMA sera privilégié par rapport à un sous-système ayant un accès radio de type CDMA, pour servir une nouvelle communication, lorsque la charge estimée sur ce sous-système TDMA est inférieure à un seuil.

L'établissement de communication qui nécessite des ressources de communication sur un sous-système du système de radiocommunication désigne soit le démarrage d'une nouvelle communication, soit la reprise sur un sous-système d'une communication ayant déjà débuté sur un autre sous-système éventuellement.

Lorsque le terminal radio pour lequel une communication doit être établie est attaché à un premier sous-système, et que l'allocation de ressources selon l'invention prévoit une prise en charge de la communication par un second sous-système, le terminal radio est avantageusement orienté vers le second sous-système préalablement à l'établissement de la communication. Cette orientation peut être commandée au terminal mobile ou bien résulter d'un paramétrage diffusé favorisant la sélection de stations de base du second sous-système.

L'allocation des ressources peut également tenir compte du type des communications à établir. Par exemple, une communication en mode paquets fera l'objet d'une allocation basée sur des considérations de charge, comme mentionné ci-dessus, tandis qu'une communication en mode circuit sera de préférence portée par le sous-système de rattachement du terminal radio concerné.

L'allocation des ressources peut en outre prendre en compte la qualité de service associée aux communications pour lesquelles des ressources ont été préalablement allouées. Elle peut aussi prendre en compte le service mis en oeuvre pour la communication qui doit être établie, en fonction des capacités des différents sous-systèmes.

La charge à considérer, c'est-à-dire l'indication déterminée relative à l'occupation des ressources de communication, peut être la charge du sous-système de rattachement et/ou celle d'un autre sous-système. Il peut en outre s'agir d'une charge globale sur une sous-partie du sous-système ou bien d'une charge relative à une partie seulement du trafic sur ce sous-système, par exemple la charge pour un mode de communication donné seulement. L'allocation est avantageusement déterminée par le sous-système de rattachement, à partir de sa propre charge qu'il évalue et de la charge des autres sous-systèmes dont des estimations lui sont avantageusement retransmises.

L'invention propose en outre un système de radiocommunication comprenant une pluralité de sous-systèmes, certains au moins des sous-systèmes de la pluralité ayant des techniques d'accès radio différentes entre eux, le système de radiocommunication étant agencé pour la mise en oeuvre du procédé susmentionné.

D'autres particularités et avantages de la présente invention apparaîtront dans la description ci-après d'exemples de réalisation non limitatifs, en référence aux dessins annexés, dans lesquels :
- la figure 1 est un schéma d'architecture simplifiée d'un système de radiocommunication hétérogène dans lequel l'invention peut être mise en oeuvre ; et
- la figure 2 est un organigramme montrant des étapes de procédé selon un mode de réalisation de l'invention.

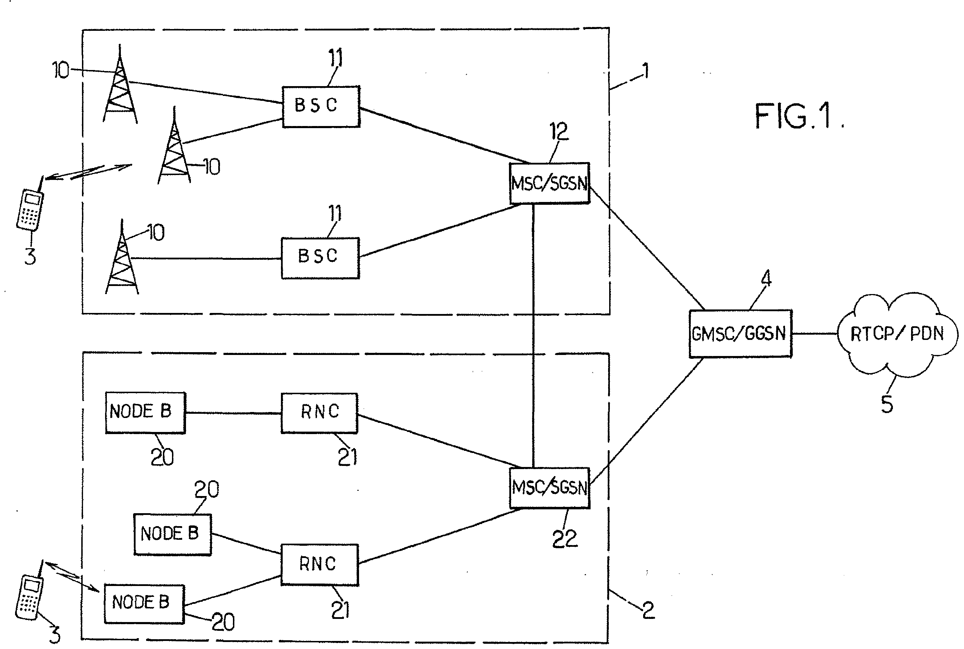

La figure 1 représente un système de télécommunication hétérogène comprenant un sous-système de radiocommunication 2,5G et un sous-système de radiocommunication 3G. Dans la suite de la description, on considère un tel système avec seulement deux sous-systèmes, bien que l'invention s'applique également au cas où le système de radiocommunication comprend plus de deux sous-systèmes.

Le sous-système 1 de deuxième génération inclut des stations de base 10 ou BTS ("Base Transceiver Stations"), reliées à des contrôleurs de stations de base 11 ou BSC ("Base Station Controllers"), eux-mêmes connectés à un commutateur de réseau coeur 12 qui peut être un MSC ("Mobile Switching Centre") si on est dans un contexte de communication en mode circuit, ou un SGSN ("Serving GPRS Support Node") si on se trouve dans un contexte de communication en mode paquets.

Le sous-système 2 de troisième génération inclut, quant à lui, des Node B 20, jouant notamment le rôle de stations de base, reliés à des contrôleurs de réseau radio 21 ou RNC ("Radio Network Controller"), eux-mêmes connectés à un commutateur de réseau coeur 22 qui peut être un MSC ou un SGSN.

Les commutateurs de réseau coeur 12 et 22 sont reliés, éventuellement par l'intermédiaire d'autres commutateurs, à une plateforme 4, qui peut être un GMSC ("Gateway Mobile Switching Centre ") ou un GGSN ("Gateway GPRS Support Node") selon que les commutateurs de réseau coeur en question sont des MSC ou des SGSN. Une telle plateforme permet l'interconnexion du système de radiocommunication hétérogène avec un réseau externe 5, qui peut être le réseau téléphonique commuté public (RTCP) si on est dans un contexte de communication en mode circuit, ou bien un réseau de transmission de données par paquets ou PDN ("Packet Data Network"), comme le réseau Internet par exemple.

Des terminaux radio 3 ou UE ("User Equipments") sont aptes à communiquer avec une entité distante, par exemple un autre terminal, par l'intermédiaire du système de radiocommunication. Une telle communication peut être effectuée soit sur le sous-système 1, soit sur le sous-système 2. Chacun des deux sous-systèmes du système de radiocommunication représenté a une technique d'accès radio différente. Ainsi, le sous-système 1, qui est basé sur le système de communication GSM/GPRS, utilise la technique d'accès TDMA évoquée en introduction. Quant au sous-système 2, qui est basé sur le système de communication UMTS, il utilise la technique d'accès CDMA évoquée en introduction. Conformément à une remarque faite en introduction, le spectre fréquentiel alloué au sous-système 2 est typiquement moins large que celui du sous-système 1. Toutefois, dans un autre cas de figure, le spectre associé au sous-système 2 pourrait être identique, voire plus large que le spectre associé au sous-système 1.

Les UE 3 supportent les deux techniques d'accès radio, si bien qu'ils sont capables d'échanger des informations avec l'un ou l'autre des deux sous-systèmes 1 et 2 selon la technique d'accès radio correspondante. Si la communication d'un UE 3 a lieu en liaison avec l'un des deux sous-systèmes 1 et 2, elle peut néanmoins se poursuivre sur l'autre sous-système comme cela sera détaillé par la suite.

Lorsqu'un UE 3 n'est pas en cours de communication, il peut être soit dans un mode où il est complètement "coupé" du système de radiocommunication, c'est-à-dire qu'aucun échange d'information ou de signalisation n'a lieu entre l'UE et le système (mode veille ou "idle" en GPRS), soit dans un mode intermédiaire où l'UE reçoit des signaux du système de radiocommunication, effectue des mesures, sélectionne une cellule couverte par une BTS 10 ou un Node B 20 et effectue des mises à jour en collaboration avec le réseau (mode veille ou "idle" en GSM et en UMTS, ou mode "ready" en GPRS). Lorsque l'UE est dans ce dernier mode, ce qui est généralement le cas avant qu'une communication impliquant cet UE soit établie, on dira par la suite, qu'il est attaché au sous-système 1 lorsque la dernière cellule sélectionnée par cet UE, éventuellement à la suite d'une re-sélection de cellule, correspond à une cellule couverte par une BTS 10 du sous-système 1, et qu'il est attaché au sous-système 2 lorsque la dernière cellule sélectionnée par cet UE correspond à une cellule couverte par un Node B 20 du sous-système 2. L'UE est par ailleurs capable lorsqu'il est attaché à l'un des deux sous-systèmes de re-sélectionner une cellule de l'autre sous-système comme cela sera détaillé ultérieurement.

Lorsqu'une communication doit être établie pour un UE appelé ou appelant, des ressources de communication, par exemple une ou plusieurs tranches temporelles dans le sous-système 1 ou un ou plusieurs codes dans le sous-système 2, sont traditionnellement allouées pour porter cette communication dans le sous-système auquel l'UE est attaché, en particulier dans la partie radio du sous-système concerné. Ainsi, des ressources radio sont allouées au niveau de la station de base couvrant la cellule ayant fait l'objet de la dernière re-sélection par l'UE.

Selon l'invention, les ressources allouées pour porter une telle communication dépendent de l'occupation des ressources dans les sous-systèmes, c'est-à-dire de valeurs de charge calculées dans le système de radiocommunication.

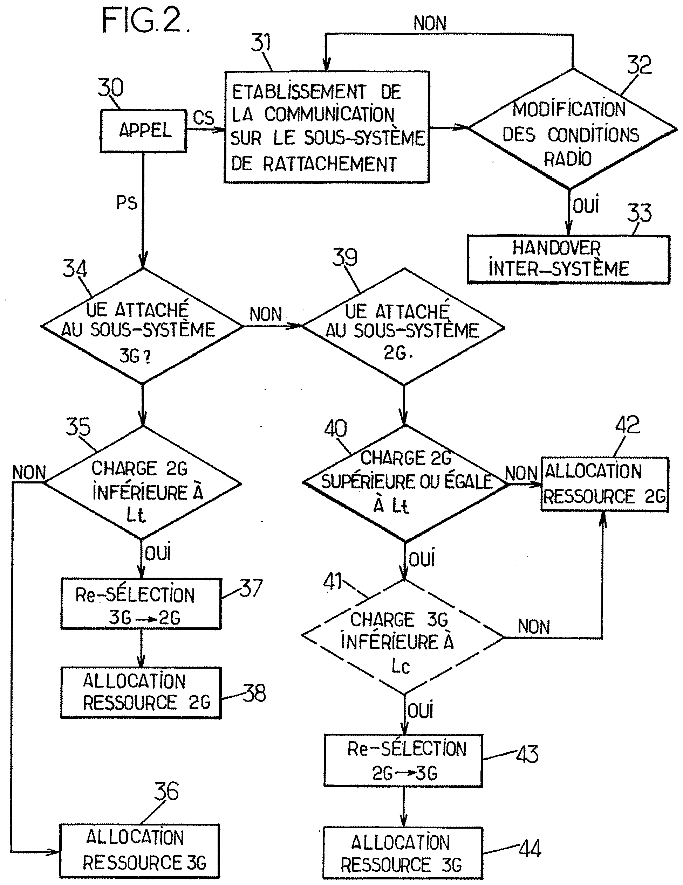

Un exemple de réalisation de l'invention est illustré sur la figure 2. A l'étape 30, un appel est détecté, ce qui signifie qu'une communication doit être établie pour un UE 3 donné, en collaboration avec le système de radiocommunication de la figure 1. Une telle communication peut résulter d'un appel entrant ou sortant impliquant l'UE 3. Elle peut aussi résulter de la reprise d'une communication existante sur de nouvelles ressources de communication, notamment lors d'une mobilité de l'UE 3 entre deux zones de couverture. Dans ce cas, l'établissement de la communication correspond à un transfert de la communication sur de nouvelles ressources, selon une procédure de handover ou de re-sélection de cellule. L'établissement d'une communication est donc à interpréter, dans le contexte de l'invention, comme le démarrage d'une communication ou bien la reprise de cette communication sur de nouvelles ressources de communication.

Si l'UE 3 considéré et le système de radiocommunication ont à la fois des capacités de communication en mode circuit (CS) et en mode paquet (PS), une première analyse est faite à l'issue de la détection de l'étape 30, dans l'exemple de réalisation illustré à la figure 2. On notera qu'une telle distinction est optionnelle et qu'il est également possible d'allouer des ressources de communication du système de radiocommunication selon la même méthode, quel que soit le mode de transmission.

Selon une première branche de l'alternative, l'appel détecté est en mode CS. A ce stade, l'UE 3 est attaché à un des deux sous-systèmes, selon la dernière cellule qu'il a sélectionnée selon une procédure classique de re-sélection de cellule évoquée plus haut. Selon le mode de réalisation illustré sur la figure 2, la communication est alors établie sur le sous-système de rattachement de l'UE 3 (étape 31). Si par exemple, la dernière re-sélection effectuée par l'UE 3 en mode veille visait une BTS 10, cela signifie que des ressources de communication sont alors allouées sur le sous-système 1 pour mettre en oeuvre la communication en mode CS. En particulier, des ressources radio de la BTS 10 en question sont allouées pour échanger des trames de communication avec l'UE 3. A l'inverse, si la dernière cellule ayant fait l'objet d'une re-sélection par l'UE 3 en mode veille est couverte par un Node B 20, la communication est alors établie sur des ressources de communication du sous-système 2. En particulier, des ressources radio du Node B 20 en question sont allouées pour échanger des trames de communication avec l'UE 3.

Comme dans le cas classique, des mécanismes de transfert de la communication établie à l'étape 31 sont disponibles. Ces mécanismes de handover, peuvent conduire la communication à être transférée sur de nouvelles ressources de communication à l'intérieur du même sous-système (les trames radio sont alors échangées avec une nouvelle BTS 10 ou un nouveau Node B 20), ou bien sur des ressources de l'autre sous-système que celui sur lequel la communication a débuté à l'étape 31 (handover inter-système). Ces mécanismes qui font partie de l'état de la technique, sont largement basés sur des mesures de conditions radio depuis la station de base serveuse et des stations de base voisines, ainsi que sur la détection par un organe de contrôle contrôlant la station de base serveuse, typiquement le BSC 11 ou le RNC 21, d'une condition de transfert (dégradation de la qualité du lien radio courant, meilleure cellule disponible, ou autre). Si une telle condition de transfert est détectée, à l'étape 32, un handover, éventuellement inter-système, peut être commandé (étape 33). Dans le cas contraire, la communication se poursuit normalement sur le sous-système de rattachement.

Selon la seconde branche de l'alternative, l'appel détecté à l'étape 30 est un appel requérant un fonctionnement en mode paquet. Il s'agit typiquement d'une transmission de données, par exemple à l'initiative de l'UE 3 considéré. On recherche alors le sous-système de rattachement pour l'UE 3, qui dépend de la dernière cellule re-sélectionnée par cet UE. On notera que, lorsque le système de radiocommunication ne connaît pas le sous-système de rattachement pour l'UE 3, il a la possibilité d'effectuer un sondage de cet UE, par exemple par paging, de façon à le découvrir. A l'étape 34, on cherche ainsi à savoir si l'UE 3 est attaché au sous-système 3G (sous-système 2 sur la figure 2).

Si l'UE 3 est bien attaché au sous-système 3G, on vérifie alors la charge du sous-système 1 à l'étape 35 (le sous-système 1 sera désigné pour simplifier par "sous-système 2G" dans la suite de la description, même s'il supporte le service GPRS, c'est-à-dire s'il s'agit en fait d'un sous-système 2,5G). A cet effet, le RNC 21 contrôlant le Node B 20 couvrant la cellule dernièrement re-sélectionnée par l'UE 3, stocke de façon continue des informations relatives à la charge des cellules 2G du sous-système 1. En effet, lorsqu'un UE effectue un handover du sous-système 2 au sous-système 1 (handover 3G->2G), en mode circuit, des indications de la charge relative à la cellule cible du handover peuvent être transmises au RNC source. Ces indications peuvent par exemple faire partie des informations prévues sous le nom "New BSS to Old BSS information" à la section 3.2.2.80 de la spécification technique TS 148 008, version 5.10.0, "Mobile Switching Centre - Base Station system (MSC-BSS) ; Interface Layer 3 Spécification", publiée en septembre 2003 par l'ETSI ("European Télécommunications Standards Institute"). Une fois les informations relatives à la charge de la cellule 2G cible communiquées au MSC/SGSN 22 du sous-système 3G, celui-ci peut alors les retransmettre au RNC 21, par exemple dans un message de commande d'exécution du handover "HO Command".

Ainsi, le RNC 21 qui stocke ces informations relatives à la charge de certaines cellules voisines du sous-système 2G peut en déduire une charge locale du sous-système 2G. Il compare ensuite la valeur de charge obtenue avec une valeur de seuil Lt. Cette valeur est avantageusement choisie de manière à optimiser les performances du système de radiocommunication. Dans cet exemple de réalisation en effet, on considère que les transmissions de données sont de meilleure qualité lorsqu'elles sont portées par un sous-système avec une technologie d'accès de type TDMA, tant que ce sous-système n'a pas atteint une valeur de charge Lt. Au-delà de cette valeur, la transmission sera de meilleure qualité si elle est portée par un sous-système avec une technologie d'accès de type CDMA. La valeur de Lt sera donc calculée de façon préalable par simulation, puis fera éventuellement l'objet d'un réglage basé sur une analyse des performances réellement obtenues sur chacun des deux sous-systèmes.

Ainsi, lorsqu'à l'étape 35, la charge 2G estimée est supérieure à Lt, on cherchera de préférence à réaliser la communication sur le sous-système 3G qui a une technologie d'accès de type CDMA. Des ressources de communication 3G seront donc allouées à la communication (étape 36). Ces ressources comprennent notamment des codes sur l'interface radio entre l'UE 3 et le Node B 20 couvrant la cellule dernièrement re-sélectionnée.

Si, au contraire, la charge 2G estimée au RNC 21 est inférieure à Lt, on cherche alors à établir la communication PS sur le sous-système 2G. Comme l'UE 3 est attaché au sous-système 3G, la re-sélection d'une cellule du sous-système 2G doit être effectuée avant d'établir la communication, de manière à assurer que les ressources allouées cette communication soient bien des ressources 2G (étape 37). Une telle re-sélection 3G->2G peut être conforme à la procédure détaillée à la section 8.3.11 de la spécification technique TS 125 331 version 5.6.0, "Universal Mobile Telecommunications System (UMTS); Radio Resource Control (RRC) protocol specification", publiée en septembre 2003 par l'ETSI. Une fois la re-sélection d'une cellule du sous-système 2G effectuée par l'UE sur commande du réseau d'accès radio du sous-système 3G, des ressources 2G peuvent être allouées pour porter la communication. En particulier, des ressources radio sont allouées pour les échanges de données entre la BTS 10 couvrant la cellule nouvellement sélectionnée et l'UE 3, sous la forme de tranches temporelles (étape 38) sur une ou plusieurs fréquences porteuses.

De façon optionnelle, la charge 2G estimée peut également être comparée à un second seuil de charge, dont la valeur est choisie de façon à ne pas surcharger inutilement le sous-système 2G. Ainsi, si la charge 2G a atteint ou dépassé un tel seuil de charge critique, on allouera de préférence des ressources du sous-système 3G pour porter la nouvelle communication, même si par ailleurs, la charge 2G est inférieure à la valeur de seuil Lt. On évite ainsi des phénomènes de blocage sur le sous-système 2G, qui limiterait la capacité globale du système de radiocommunication.

Dans l'hypothèse où l'UE 3 considéré n'est pas attaché au sous-système 3G, cela signifie qu'il est attaché au sous-système 2G (étape 39). Comme dans le cas précédent, on cherche alors à estimer une indication relative à la charge sur le sous-système 2G, de façon à établir la communication sur le sous-système 2G si sa charge est inférieure à un seuil, ou bien sur le sous-système 3G sinon.

On estime ainsi une charge 2G à l'étape 40. Cette estimation peut être effectuée dans le sous-système 2G, par exemple par l'utilisation de compteurs d'événements. Ces compteurs peuvent être incrémentés sur la base d'une cellule ou d'un groupe de cellules. De façon à obtenir une information pertinente de charge sous-système 2G, il sera avantageux de prendre en compte les informations comptabilisées sur un nombre significatif de cellules, en ajoutant les valeurs de compteurs obtenues pour chaque cellule ou groupe de cellules.

A cet effet, on utilise avantageusement une estimation de la charge globale en 2G, c'est-à-dire pour tous les modes de communication disponibles, et en particulier aussi bien en mode CS et qu'en mode PS, étant entendu qu'un mécanisme d'adaptation peut être utilisé dans le sous-système 2G pour réserver dynamiquement une proportion des ressources au trafic CS et au trafic PS en fonction des demandes respectives.

La charge du sous-système 2G liée au trafic CS est déduite par exemple d'un nombre de requêtes d'une ressource de communication sur une période d'observation. Quant à la charge du sous-système 2G liée au trafic PS pourra ainsi être déduite par exemple des indicateurs suivants : le nombre de contextes de communication (PDP contexts) activés, le nombre de pertes anormales de transmissions de données (le nombre de pertes est sensiblement lié au nombre de transmissions de données), le niveau de charge du processeur du PCU qui est l'unité de contrôle de paquets transmis selon le service GPRS et qui peut être intégrée à un BSC 11 par exemple (la charge du processeur dépend de l'occupation des ressources de communication), le remplissage d'une file d'attente du PCU contenant les unités de données à transmettre (plus les ressources de communication 2G sont sollicitées, plus les unités de données restent longtemps dans la file d'attente), le débit offert par rapport au débit requis par chaque utilisateur (une offre répondant parfaitement à la demande est significative d'une faible occupation des ressources de communication), des indicateurs de qualité sur la voie radio tels que le RxQual (la qualité étant d'autant meilleure que l'interférence liée à l'occupation des canaux radio est faible en 2G), le nombre de blocs et de trames transmis ou erronés, ou encore le ratio, calculé au niveau du PCU, entre le nombre de blocs transmis sur l'interface radio et le nombre maximal de bloc pouvant être transmis sur l'ensemble des ressources radio disponibles pour le trafic PS (qui correspond à un pourcentage d'occupation des ressources radio). Bien sûr, bien d'autres indicateurs que ceux cités précédemment peuvent être utilisés pour parvenir à une estimation pertinente de la charge du sous-système 2G.

Dans un mode de réalisation avantageux de l'invention, les indicateurs utilisés pour estimer la charge 2G sont pondérés selon la qualité de service des utilisateurs impliqués dans certaines communications effectuées en 2G. Ainsi, si l'indicateur utilisé est un nombre de blocs transmis sur l'interface radio, les blocs transmis par un utilisateur ayant souscrit un abonnement lui garantissant une très bonne qualité de service sont comptabilisés avec un coefficient multiplicateur élevé, tandis que les blocs transmis par un utilisateur ayant souscrit un abonnement sans considération de qualité de service sont comptabilisés avec un coefficient multiplicateur faible. De cette façon, la charge 2G est artificiellement sur-évaluée pour éviter un trop grand afflux de nouvelles communications vers le sous-système 2G, qui pourrait porter la qualité de service offerte au-dessous de ce que certains utilisateurs sont en droit d'attendre.

La charge globale en 2G est alors déduite des estimations de charge obtenues pour les trafics CS et PS respectivement, par exemple en sommant les deux estimations. Dans le cas où les estimations ne sont pas réalisées par le même équipement, une centralisation des estimations est alors faite pour permettre le calcul de la charge globale. Par exemple si la charge liée au trafic PS est estimée au niveau d'un BSC 11, tandis que la charge liée au trafic CS est estimée au niveau d'un PCU, le PCU transmettra alors avantageusement le résultat de son estimation au BSC 11, lequel réalisera l'estimation globale de la charge en 2G. On notera que les informations relatives à la charge du sous-système 2G transmises au sous-système 3G à l'étape 35, précédemment commentée, peuvent par exemple contenir l'estimation de la charge 2G réalisée dans le sous-système 2G, selon les indicateurs susmentionnés.

Une fois l'estimation de la charge 2G effectuée, on la compare, à l'étape 40, à un seuil de charge Lt, qui a sensiblement la même valeur que le seuil utilisé à l'étape 35 décrite ci-dessus, bien qu'une valeur différente puisse également être envisagée. Lorsque la charge 2G estimée est inférieure à Lt, on choisit alors d'allouer des ressources de communication 2G pour porter la nouvelle communication (étape 42). Le BSC 11 qui contrôle la BTS 10 couvrant la cellule ayant fait l'objet de la dernière re-sélection de la part de l'UE 3 considéré est alors avantageusement chargé de la comparaison de la charge 2G avec le seuil Lt et de l'allocation de ressources radio de communication entre la BTS 10 et l'UE 3. Grâce à ce mécanisme, on s'assure ainsi que les nouvelles communications sont portées de préférence par le sous-système 2G lorsque les ressources radio de celui-ci sont peu occupées.

En revanche, si la comparaison de l'étape 40 indique que la charge 2G estimée est supérieure ou égale au seuil Lt, on privilégie l'allocation de ressources du sous-système 3G pour porter la nouvelle communication impliquant l'UE 3 considéré. Pour ce faire, une re-sélection 2G->3G est effectuée. On notera que contrairement au cas classique où le terminal mobile est chargé d'effectuer les re-sélections de cellules de façon autonome, l'invention prévoit que la re-sélection susmentionnée est commandée par le réseau. Ce mode de fonctionnement contrôlé par le réseau est notamment prévu par la diffusion ou la transmission à l'UE considéré du paramètre NC2 décrit à la section 10.1.4 de la spécification technique 145 008, version 5.12.0, "Digital cellular telecommunications system (Phase 2+); Radio subsystem link control", publiée en août 2003 par l'ETSI. Le sous-système 2G envoie alors une commande à l'UE 3 pour que ce dernier re-sélectionne une cellule sous le contrôle du sous-système 3G (voir le paragraphe 10.1.4.2 de la spécification technique 145 008 précitée). Cette commande, dite PACKET CELL CHANGE ORDER, ainsi que le mécanisme de re-sélection de cellule inter-système sont par ailleurs détaillés dans la spécification technique TS 144 060, version 5.8.0, "Digital cellular télécommunications system (Phase 2+); General Packet Radio Service (GPRS); Mobile Station (MS) - Base Station System (BSS) interface; Radio Link Control/ Medium Access Control (RLC/MAC) protocol", publiée en septembre 2003.

Une fois la re-sélection 2G->3G effectuée, des ressources de communication 3G sont alors allouées pour porter la communication impliquant l'UE 3 considéré (étape 44). Cette allocation contrôlée par un RNC 21 concerne en particulier des ressources de communication radio 3G entre le Node B 20 couvrant la cellule ayant fait l'objet de la re-sélection 2G->3G et l'UE 3.

Selon un mode de réalisation avantageux, la charge du sous-système 3G peut également faire l'objet d'une estimation avant d'allouer des ressources à la nouvelle communication. Ce mode de réalisation fait l'objet de l'étape optionnelle 41, indiquée en trait interrompu sur la figure 2. Il prévoit en effet d'estimer une charge sur le sous-système 3G et de la comparer à une valeur de seuil. On évite ainsi de faire passer la nouvelle communication sur le sous-système 3G, lorsque celui-ci a déjà atteint une valeur de charge critique Lc, quitte à ce que la qualité de la communication alors portée par le sous-système 2G (étape 42), chargé au-delà de Lt, soit ainsi sous-optimale.

Là encore, l'estimation de la charge 3G peut être effectuée de diverses façons. Par exemple, un RNC 21 estime l'occupation des ressources radio 3G pour écouler du trafic en mode CS. Ce RNC 21 évalue par ailleurs un ratio entre un nombre de blocs de données transmis en mode PS et un nombre théorique maximum de blocs pouvant être transmis dans la même période d'observation. Une sommation des charges liées au trafic CS et au trafic PS peut alors être effectuée pour obtenir une estimation de la charge 3G globale. En alternative, on peut se contenter d'estimer la charge 3G liée à un seul des deux modes de communication. Par exemple, on considère la charge liée au trafic PS uniquement si la nouvelle communication doit elle-même être effectuée en mode PS. On évite ainsi de basculer la nouvelle transmission de données vers le sous-système 3G, lorsque celui-ci a ses ressources réservées à l'écoulement du trafic en mode PS déjà largement occupées. Bien sûr, bien d'autres indicateurs peuvent être utilisés pour obtenir une estimation de la charge 3G. A titre d'exemples supplémentaires, pour la charge liée au trafic PS, on cite les indicateurs suivants, qui peuvent être consolidés sur une cellule 3G ou sur un ensemble de cellules 3G (par exemple toutes les cellules couvertes par des Nodes B 20 sous le contrôle d'un RNC 21) : un nombre de connexions refusées entre un RNC 21 et un ensemble d'UE, un nombre d'accès radio ayant abouti sur un échec, un nombre de demandes de paging ayant abouti sur un échec, une charge moyenne du processeur d'un RNC et les variations d'une telle charge, un nombre de codes alloués par rapport au nombre de codes disponibles, un pourcentage de la puissance utilisée par rapport à une puissance totale disponible, ou autre. Comme dans le cas 2G décrit plus haut, la charge 3G peut être pondérée pour prendre en compte la qualité de service associée aux différents utilisateurs effectuant des communications sur le sous-système 3G.

Une fois une estimation de charge 3G établie, par exemple pour toutes les cellules supervisées par un RNC 21, elle est avantageusement transmise au BSC 11 contrôlant la BTS 10 couvrant la cellule dernièrement re-sélectionnée par l'UE 3 considérée (cette transmission peut être réalisée directement si le RNC 21 et le BSC 11 sont reliés entre eux ou bien via d'autres équipements tels que les MSC/SGSN 12 et 22, voire le GMSC/GGSN 4). Le BSC 11 en question peut donc ainsi prendre en compte l'information relative à la charge du sous-système 3G pour décider d'allouer des ressources 2G à la nouvelle communication, ou bien au contraire de commander à l'UE d'effectuer une re-sélection 2G->3G, comme dans le cas décrit précédemment.

On notera qu'en plus des considérations de charge sur les sous-systèmes 1 et 2, une nouvelle communication en mode PS détectée à l'étape 30, sera en outre orientée en priorité vers le sous-système 3G si elle correspond à un service offert seulement par ce sous-système. Par exemple, si la communication nécessite des transferts d'une grande quantité de données en temps réel (par exemple pour des applications de "streaming"), elle sera servie par le sous-système 3G, le sous-système 2G n'ayant pas les capacités suffisantes pour supporter et contrôler une telle communication. En revanche, si la communication est réalisée selon un service supporté par les deux sous-systèmes 2G et 3G, par exemple sans contrainte de temps réel, elle sera orientée vers l'un des sous-systèmes selon le procédé illustré sur la figure 2. En alternative, une telle communication sera portée avec une plus forte priorité sur le sous-système 2G, de manière à laisser des ressources disponibles du sous-système 3G à de futures communications requérant un service temps réel. Le même principe s'applique en fonction du débit requis pour la communication en mode PS détectée à l'étape 30 : si ce débit est supérieur à ce que le sous-système 2G est en mesure d'offrir, la communication sera portée par le sous-système 3G, quelle que soit la charge respective des sous-systèmes 2G et 3G.

Dans le mode de réalisation de l'invention décrit plus haut, lorsqu'une re-sélection inter-système (étapes 37 et 43) est requise avant l'allocation de ressources du système de radiocommunication, cette re-sélection est commandée par un contrôleur radio. Ainsi, si l'UE 3 considéré est attaché au sous-système 2G, la re-sélection 2G->3G sera initiée par le BSC 11 contrôlant la BTS 10 couvrant la cellule dernièrement re-sélectionnée par l'UE 3. A l'inverse, lorsque l'UE 3 est attaché au sous-système 3G, la re-sélection 3G->2G sera commandée par le RNC 21 contrôlant le Node B 20 couvrant la cellule dernièrement re-sélectionnée par l'UE 3.

Dans un autre mode de réalisation, la re-sélection inter-système peut être favorisée par un paramétrage dynamique dans le réseau coeur du système de radiocommunication. En effet, des indicateurs relatifs à la charge de chaque sous-système sont également disponibles au niveau par exemple des commutateurs MSC/SGSN 12 et 22 et GMSC/GGSN. Par exemple, un SGSN comptabilise le nombre de contextes de communications en mode PS (PDP contexts) activés sur une période d'observation. Il est donc en mesure d'en déduire une estimation de l'occupation des ressources disponibles dans sa zone de couverture, et notamment des ressources radio sous le contrôle du ou des BSC 11 et RNC 21 qui lui sont reliés. Une granularité plus fine pour l'estimation de la charge peut même être obtenue au niveau du réseau coeur. En effet, les commutateurs de réseau coeur sont chargés de générer des tickets de facturation pour chaque cellule ou groupe de cellules. L'estimation de la charge peut donc être obtenue pour un tel groupe de cellules.

Par ailleurs, l'algorithme de re-sélection de cellule réalisée par un UE consiste à calculer un critère pour une cellule serveuse (à laquelle l'UE est attaché) et un second critère pour des cellules voisines, la cellule pour laquelle le critère adéquat a la plus grande valeur étant re-sélectionnée. Les critères eh question comprennent des mesures radio de qualité relatives à la cellule et aux cellules voisines respectivement. Ils prennent également en compte des paramètres diffusés par le réseau. Parmi ces paramètres, le critère concernant la cellule serveuse comprend un hystérésis visant à limiter le nombre de re-sélections successives, lorsque l'UE est à la frontière entre deux ou plusieurs cellules. Cet hystérésis favorise ainsi le maintien sur la cellule serveuse. Par ailleurs, des marges sont utilisées dans le critère relatif aux cellules voisines, pour favoriser ou pénaliser la re-sélection de chaque cellule voisine de façon indépendante. Enfin, une composante temporelle peut également être utilisée dans l'expression du critère relatif aux cellules voisines afin d'éviter des re-sélections de cellule trop fréquentes.

Selon ce mode de réalisation de l'invention, les critères utilisés dans l'algorithme de re-sélection sont modifiés en fonction de la charge estimée sur l'un au moins des sous-systèmes 2G et 3G. A titre d'exemple, si on se trouve à l'étape 40 dé la figure 2, et si la charge 2G estimée par le MSC/SGSN 12 ou le GMSC/GGSN 4 est supérieure ou égale à la valeur de seuil Lt, on peut alors réduire l'hystérésis pour la cellule serveuse couverte par une BTS 10 à laquelle l'UE 3 est attaché de manière à favoriser une re-sélection, ou bien, de préférence, modifier les marges appliquées aux cellules voisines de cette cellule serveuse, de manière à favoriser la re-sélection de cellule vers une cellule 3G couverte par un Node B 20, et éventuellement en pénalisant les cellules voisines 2G couvertes par d'autres BTS 10. On augmente ainsi la probabilité de voir l'UE 3 effectuer une re-sélection 2G->3G, correspondant à l'étape 43 du diagramme de la figure 2.

Une telle modification des paramètres, cellule par cellule, est avantageusement réalisée au niveau du centre d'opérations et de maintenance ou OMC ("Operations & Maintenance Centre"), de préférence unifié pour les sous-systèmes 2G et 3G, supervisant le système de radiocommunication. Elle peut être réalisée manuellement par un opérateur, lorsque celui-ci prend connaissance des estimations de la charge réalisées dans le réseau coeur, ou bien selon un script automatique ayant comme paramètres d'entrée des estimations de charge. Les nouvelles valeurs des paramètres sont alors transmises sur des canaux de diffusion écoutés par l'ensemble des UE, de façon à ce que ces derniers les prennent en compte.

Cette méthode permet ainsi de favoriser les re-sélections inter-système lorsque la situation en termes de charge des sous-systèmes 2G et 3G le justifie, ou au contraire de les éviter dans le cas contraire. Elle présente en outre l'avantage dé laisser les UE mettre en oeuvre l'algorithme de re-sélection de cellule classique, de façon autonome, sans que des traitements supplémentaires et des messages de signalisation en résultant soient requis de la part des équipements radio du système de radiocommunication.

Dans l'exemple de réalisation de l'invention décrit jusque là, et illustré sur la figure 2, on a fait l'hypothèse, basée sur le constat évoqué en introduction, que les nouvelles communications devaient être orientées de préférence vers un sous-système 2G avec une technique d'accès radio de type TDMA tant que celui-ci n'était pas chargé au-delà d'une certaine valeur de seuil, et vers un sous-système 3G avec une technique d'accès radio de type CDMA lorsque le sous-système 2G est chargé au-delà de la valeur de seuil. La valeur de seuil est déterminée de telle façon que le sous-système 2G donne de meilleures performances, en termes de qualité de communication, en-dessous de cette valeur, mais des performances inférieures au sous-système 3G au-dessus de cette valeur. L'exemple décrit plus haut permet ainsi de faire porter la communication de préférence par le sous-système qui lui conférera la meilleure qualité possible.

Toutefois, la présente invention a un caractère plus général, puisqu'elle vise à orienter le trafic vers un sous-système donné d'un système de radiocommunication comprenant plusieurs sous-systèmes, en fonction de la charge observée sur certains au moins de ces sous-systèmes. Elle permet donc en outre une répartition du trafic entre sous-systèmes limitant les phénomènes de blocage et d'échec, puisque le trafic peut ainsi être orienté de préférence vers un sous-système peu chargé. Une amélioration de l'occupation des ressources globale du système en résulte donc.

On comprend ainsi que bien d'autres combinaisons que l'exemple illustré sur la figure 2 sont possibles. A titre d'exemple, on peut envisager qu'à l'inverse de l'exemple de la figure 2, le trafic est d'abord orienté de préférence vers le sous-système 3G tant que celui-ci est peu chargé, puis, lorsque les ressources 3G sont occupées au-delà d'un seuil de charge, qu'il est orienté de préférence vers le sous-système 2G.

En outre, plus de deux sous-systèmes peuvent être utilisés selon la présente invention, certains de ces sous-systèmes ayant des techniques d'accès radio différentes entre eux. Divers scénarios peuvent alors être envisagés, par exemple en privilégiant d'abord l'utilisation des ressources d'un premier sous-système tant que son niveau de charge est limité, puis d'un deuxième sous-système tant que son niveau de charge est limité, et ainsi de suite jusqu'à utiliser les ressources du dernier sous-système. Puis lorsque ce dernier dépasse lui-même un seuil de charge, d'allouer à nouveau des ressources du premier sous-système, puis du second sous-système, etc. De façon avantageuse, à l'image de l'exemple illustré sur la figure 2, les sous-systèmes seront alors classés dans l'ordre décroissant de la qualité de communication qu'ils offrent à faible charge, de manière à optimiser la qualité des nouvelles communications, du moins tant que la charge globale du système de radiocommunication reste en-deça d'une certaine limite.

## Revendications

1. Procédé d'allocation de ressources de communication dans un système de radiocommunication comprenant au moins un premier (1) et un second (2) sous-systèmes ayant des techniques d'accès radio différentes et étant aptes à communiquer avec des terminaux radio (3), le procédé comprenant les étapes suivantes :
- on détermine une indication relative à une occupation des ressources de communication pour l'un au moins desdits premier et second sous-systèmes ;
- lorsqu'une communication doit être établie pour un terminal radio, on alloue au moins une ressource de communication du premier ou du second sous-système pour porter la communication, en tenant compte de l'indication déterminée,
dans lequel l'allocation d'au moins une ressource de communication du premier (1) ou du second (2) sous-système pour porter la communication concerne au moins une ressource de communication du premier sous-système (1) si l'indication relative à l'occupation des ressources de communication du premier sous-système révèle une occupation inférieure à un seuil (Lt), et au moins une ressource du second sous-système (2) si ladite indication révèle une occupation supérieure audit seuil, le procédé étant **caractérisé en ce que** le seuil (Lt) est réglé de façon à ce que le premier sous-système
(1) offre une meilleure qualité de communication que le second sous-système
(2) lorsque ses ressources de communication sont occupées à un niveau inférieur audit seuil, et une qualité de communication inférieure au second sous-système lorsque ses ressources de communication sont occupées à un niveau supérieur audit seuil.

2. Procédé selon la revendication 1, dans lequel, lorsque le terminal radio pour lequel une communication doit être établie est attaché au premier sous-système (1) et que la prise en compte de l'indication déterminée implique l'allocation d'au moins une ressource de communication du second sous-système (2) pour porter la communication, on transmet d'abord une indication au terminal radio pour qu'il s'attache au second sous-système, avant d'allouer la ressource de communication du second sous-système.

3. Procédé selon la revendication 2, dans lequel ladite indication transmise au terminal radio est un message lui commandant de s'attacher au second sous-système.

4. Procédé selon la revendication 2, dans lequel le terminal radio est agencé pour sélectionner une station de base (10, 20) du système de radiocommunication à partir de mesures effectuées sur des signaux radio reçus depuis plusieurs stations de base du système de radiocommunication et de paramètres de sélection, et dans lequel ladite indication transmise au terminal radio est une mise à jour diffusée de certains au moins des paramètres de sélection, lesdits paramètres de sélection étant réglés pour favoriser la sélection d'une station de base du second sous-système (2).

5. Procédé selon l'une quelconque des revendications précédentes, dans lequel les communications entre les terminaux radio (3) et le premier (1) ou le second (2) sous-système sont effectuées en mode paquets ou en mode circuit, et dans lequel l'allocation d'au moins une ressource de communication du premier ou du second sous-système pour porter la communication est effectuée en tenant compte de l'indication déterminée seulement si ladite communication doit être effectuée en mode paquets.

6. Procédé selon l'une quelconque des revendications précédentes, dans lequel, lorsque le termina! radio pour lequel une communication doit être établie est attaché au premier sous-système (1), l'allocation d'au moins une ressource de communication du premier (1) ou du second (2) sous-système pour porter la communication concerne au moins une ressource de communication du second sous-système (2) en outre si l'indication relative à l'occupation des ressources de communication du second sous-système révèle une occupation inférieure à un second seuil (Lc).

7. Procédé selon l'une quelconque des revendications précédentes, dans lequel la technique d'accès radio pour l'un desdits premier (1) et second (2) sous-systèmes est à répartition par codes (CDMA).

8. Procédé selon l'une quelconque des revendications précédentes, dans lequel la technique d'accès radio pour l'un desdits premier (1) et second (2) sous-systèmes est à répartition temporelle (CDMA).

9. Procédé selon l'une quelconque des revendications précédentes, dans lequel le second sous-système (2) a un spectre fréquentiel substantiellement moins large que le premier sous-système (1).

10. Procédé selon l'une quelconque des revendications précédentes, dans lequel l'indication relative à l'occupation des ressources tient compte d'une qualité de service associée aux communications pour lesquelles des ressources ont été allouées.

11. Procédé selon l'une quelconque des revendications précédentes, dans lequel chacun des premier (1) et second (2) sous-systèmes est agencé pour déterminer l'indication relative à l'occupation de ses propres ressources de communication, et pour obtenir l'indication déterminée relative à l'occupation des ressources de communication de l'autre sous-système, et dans lequel celui desdits premier et second sous-systèmes sur lequel le terminal radio est attaché détermine si la ressource de communication à allouer pour porter la communication est une ressource du premier ou du second sous-système.

12. Procédé selon l'une quelconque des revendications précédentes, dans lequel le premier sous-système (1) est apte à communiquer avec des terminaux radio (3) selon un premier ensemble de services et le second sous-système (2) est apte à communiquer avec des terminaux radio (3) selon un second ensemble de services, et dans lequel l'allocation d'au moins une ressource de communication du premier ou du second sous-système pour porter la communication tient compte en outre du service mis en oeuvre pour ladite communication.

13. Système de radiocommunication comprenant une pluralité de sous-systèmes (1, 2), certains au moins des sous-systèmes de la pluralité ayant des techniques d'accès radio différentes entre eux, le système de radiocommunication étant agencé pour la mise en oeuvre du procédé selon l'une quelconque des revendications précédentes.

## Patentansprüche

1. Verfahren zur Zuweisung von Kommunikationsressourcen in einem Funkkommunikationssystem, mindestens ein erstes (1) und ein zweites (2) Untersystem mit unterschiedlichen Funkzugangstechniken umfassend, die ausgelegt sind für das Kommunizieren mit Funkendgeräten (3), wobei das Verfahren die folgenden Schritte umfasst:
- das Bestimmen einer Indikation zu einer Belegung von Kommunikationsressourcen durch mindestens eines des besagten ersten und des besagten zweiten Untersystems;
- wenn eine Kommunikation durch ein Funkendgerät hergestellt werden muss, das Zuweisen mindestens einer Kommunikationsressource des ersten oder des zweiten Untersystems zum Tragen der Kommunikation, dabei die bestimmte Indikation berücksichtigend,
wobei die Zuweisung mindestens einer Kommunikationsressource des ersten (1) oder des zweiten (2) Untersystems zum Tragen der Kommunikation dann mindestens eine Kommunikationsressource des ersten Untersystems betrifft, wenn die Indikation zur Kommunikationsressourcenbelegung des ersten Untersystems (1) eine Belegung unterhalb eines Schwellenwerts (Lt) angibt, und dann mindestens eine Ressource des zweiten Untersystems (2), wenn besagte Indikation eine Belegung oberhalb besagten Schwellenwerts angibt,
wobei das Verfahren **dadurch gekennzeichnet ist, dass** der Schwellenwert (Lt) dergestalt eingestellt ist, dass das erste Untersystem
(1) dann eine bessere Kommunikationsqualität als das zweite Untersystems
(2) bietet, wenn seine Kommunikationsressourcen in einem geringeren Grad als von besagtem Schwellenwert festgelegt belegt sind, und eine schlechtere Kommunikationsqualität als das zweite Untersystem dann, wenn seine Kommunikationsressourcen in einem höheren Grad als von besagtem Schwellenwert festgelegt belegt sind,

2. Verfahren nach Anspruch 1, wobei dann, wenn das Funkendgerät, für das eine Kommunikation herzustellen ist, mit dem ersten Untersystems (1) verbunden ist, und wenn die Berücksichtigung der bestimmten Indikation die Zuweisung mindestens einer Kommunikationsressource des zweiten Untersystems (2) zum Tragen der Kommunikation impliziert, zuvor eine Indikation an das Funkendgerät übermittelt wird, damit es sich mit dem zweiten Untersystems verbindet, ehe die Kommunikationsressource des zweiten Untersystems zugewiesen wird.

3. Verfahren nach Anspruch 2, wobei die besagte, an das Funkendgerät übermittelte Indikation eine Nachricht ist, die dieses anweist, sich mit dem zweiten Untersystem zu verbinden.

4. Verfahren nach Anspruch 2, wobei das Funkendgerät dafür ausgelegt ist, um eine Basisstation (10, 20) des Funkkommunikationssystems auszuwählen, was auf der Grundlage von Messungen der Funksignale, die von mehreren Basisstationen des Funkkommunikationssystems empfangen wurden, und von Auswahlparametern erfolgt, und wobei die besagte, an das Funkendgerät übermittelte Indikation eine gesendete Aktualisierung mindestens einiger der Auswahlparameter ist, wobei besagte Auswahlparameter so eingestellt sind, dass sie die Auswahl einer Basisstation des zweiten Untersystems (2) begünstigen.

5. Verfahren nach einem jeglichen der vorgenannten Ansprüche, wobei die Kommunikationen zwischen dem Funkendgerät (3) und dem ersten (1) oder dem zweiten (2) Untersystem im Paketmodus oder im Schaltmodus erfolgen und wobei die Zuweisung von mindestens einer Kommunikationsressource des ersten oder des zweiten Untersystems zum Tragen der Kommunikation nur dann unter Berücksichtigung der bestimmten Indikation erfolgt, wenn besagte Kommunikation im Paketmodus zu erfolgen hat.

6. Verfahren nach einem jeglichen der vorgenannten Ansprüche, wobei dann, wenn das Funkendgerät, für das eine Kommunikation herzustellen ist, mit dem ersten Untersystem (1) verbunden ist, die Zuweisung mindestens einer Kommunikationsressource des ersten (1) oder des zweiten (2) Untersystems zum Tragen der Kommunikation weiterhin mindestens eine Kommunikationsressource des zweiten Untersystems (2) betrifft, wenn die Indikation zur Kommunikationsressourcenbelegung des zweiten Untersystems eine Belegung unterhalb eines zweiten Schwellenwerts (Lc) angibt.

7. Verfahren nach einem jeglichen der vorgenannten Ansprüche, wobei die Funkzugangstechnik für entweder das erste (1) oder das zweite (2) Untersystem ein Codemultiplexverfahren (Code Division Multiple Access, CDMA) ist.

8. Verfahren nach einem jeglichen der vorgenannten Ansprüche, wobei die Funkzugangstechnik für entweder das erste (1) oder das zweite (2) Untersystem ein Zeitmultiplexverfahren (Time Division Multiple Access, TDMA) ist.

9. Verfahren nach einem jeglichen der vorgenannten Ansprüche, wobei das Frequenzspektrum des zweiten Untersystems (2) substantiell weniger groß ist, als dasjenige des ersten Untersystems (1).

10. Verfahren nach einem jeglichen der vorgenannten Ansprüche, wobei die Indikation zur Ressourcenbelegung eine Dienstgüte berücksichtigt, die mit den Kommunikationen assoziiert ist, für welche Ressourcen zugewiesen wurden.

11. Verfahren nach einem jeglichen der vorgenannten Ansprüche, wobei das erste (1) wie auch das zweite (2) Untersystem ausgelegt sind für das Bestimmen der Indikation zu einer Belegung der jeweils eigenen Kommunikationsressourcen und für das Erlangen der bestimmten Indikation zur Belegung der Kommunikationsressourcen des andern Untersystems, und wobei dasjenige der beiden Untersysteme, mit dem das Funkendgerät verbunden ist, bestimmt, ob die zum Tragen der Kommunikation zugewiesene Kommunikationsressource eine Ressource des ersten oder des zweiten Untersystems ist.

12. Verfahren nach einem jeglichen der vorgenannten Ansprüche, wobei das erste Untersystem (1) ausgelegt ist für das Kommunizieren mit dem Funkendgerät (3) gemäß einer ersten Gruppe von Diensten und wobei das zweite Untersystem (2) ausgelegt ist für das Kommunizieren mit dem Funkendgerät (3) gemäß einer zweiten Gruppe von Diensten, und wobei die Zuweisung von mindestens einer Kommunikationsressource des ersten oder des zweiten Untersystems zum Tragen der Kommunikation weiterhin den Dienst berücksichtigt, der durch besagte Kommunikation erbracht wird.

13. Funkkommunikationssystem, eine Vielzahl von Untersystemen (1,2) umfassend, wobei mindestens einige der Untersysteme aus besagter Vielzahl unterschiedliche Funkzugangstechniken haben, wobei das Funkkommunikationssystem ausgelegt ist für das Ausführen des Verfahrens nach einem jeglichen der vorgenannten Ansprüche.

## Claims

1. A method for allocating communication resources within a radio communication system comprising at least one first (1) and a second (2) subsystems having different radio access techniques and being able to communicate with radio terminals (3), the method comprising the following steps:
- an indication is determined related to an occupation of communication resources for at least one of said first and second subsystems;
- when a communication must be established for a radio terminal, at least one communication resource is allocated from the first or second subsystem in order to carry the communication, taking into account the determined indication.
Wherein the allocation of at least one communication resource from the first (1) or the second (2) subsystem for carrying the communication relates to at least one communication resource of the first subsystem (1) if the indication related to the occupation of the communication resources of the first subsystem reveals an occupation below a threshold (Lt), and at least one resource of the second subsystem (2) if said indication reveals an occupation above said threshold,
the method being **characterized in that** the threshold (LT) is set such that the first subsystem (1) offers a better quality of communication than the second subsystem (2) when its communication resources are occupied at a level below said threshold, and a quality of communication less than the second subsystem when its communication resources are occupied at a level above said threshold.

2. A method according to claim 1, wherein, when the radio terminal for which a communication must be established is attached to the first subsystem (1) and the acceptance of the determined indication implies the allocation of at least one communication resource from the second subsystem (2) to carry the communication, an indication is first transmitted to the radio terminal so that it attaches to the second subsystem, before allocating the communication resource from the second subsystem.

3. A method according to claim 2, wherein said indication transmitted to the radio terminal is a message ordering it to attach to the second subsystem.

4. A method according to claim 2, wherein the radio terminal is arranged to select a base station (10, 20) of the radio communication system based on measurements made on radio signals received from several base stations of the radio communication system and on selection parameters, and wherein said indication transmitted to the radio terminal is a broadcast update of at least some of the selection parameters, said selection parameters being set to encourage the selection of a base station of the second subsystem (2).

5. A method according to any one of the preceding claims, wherein the communications between the radio terminals (3) and the first (1) or second (2) subsystem are carried out in packet mode or circuit mode, and wherein the allocation of at least one communication resource from the first or second subsystem communication resource from the first or second subsystem to carry the communication is performed while taking into account the determined indication only if said communication is to be carried out in packet mode.

6. A method according to any one of the preceding claims, wherein, when the radio terminal for which a communication is to be established is attached to the first subsystem (1), the allocation of at least one communication resource from the first (1) or second (2) subsystem for carrying the communication relates to at least one communication resource of the second subsystem (2) as well if the indication related to the occupation of the communication resources of the second subsystem reveals an occupation below a second threshold (Lc).

7. A method according to any one of the preceding claims, wherein the radio access technique for either the first (1) or second (2) subsystems is code-division multiplexing (CDMA).

8. A method according to any one of the preceding claims, wherein the radio access technique for either the first (1) or second (2) subsystems is time-division multiplexing (TDMA).

9. A method according to any one of the preceding claims, wherein the second subsystem (2) has a much less broad frequency spectrum than the first subsystem (1).

10. A method according to any one of the preceding claims, wherein the indication related to the occupation of the resources takes into account a quality of service associated with the communications for which the resources were allocated.

11. A method according to any one of the preceding claims, wherein each of the first (1) and second (2) subsystems is arranged to determine the indication relating to the occupation of its own communication resources, and to obtain the determined indication related to the occupation of communication resources of the other subsystem, and wherein whichever of the first and second subsystems the radio terminal is attached to determines whether the communication resource to be allocated to carry the communication is a resource of the first or second subsystem.

12. A method according to any one of the preceding claims, wherein the first subsystem (1) is able to communicate with the radio terminal (3) according to a first set of services and the second subsystem (2) is able to communicate with radio terminals (3) according to a second set of services, and wherein the allocation of at least one communication resource from the first or second subsystem to carry the communication further takes into account the service implemented for said communication.

13. A radio communication system comprising a plurality of subsystems (1, 2), at least some of the subsystems of the plurality having different radio access techniques among them, the radio communication system being arranged to implement the method according to any one of the preceding claims.
